# EUROPEAN PATENT APPLICATION

(11) **EP 0 834 655 A1**
(43) Date of publication of application: **08.04.1998**
(21) Application number: 97307450.3
(22) Date of filing: 24.09.1997
(51) Int. Cl.: F04C 29/08, F04B 39/10, F16K 15/14

(54) **Delivery valve structure**

(30) Priority: 07.10.1996 JP 284684/96
(71) Applicant: Zexel Corporation, Shibuya-ku Tokyo (JP)
(72) Inventor: Murayama, Toshihiro, Aza-higashihara, Konan-machi, Saitama (JP); Muta, Shunji, Aza-higashihara, Konan-machi, Saitama (JP)
(74) Representative: Matthews, Howard Nicholas

(57) **Abstract**

In order to achieve an object of providing a delivery valve structure that facilitates insertion of the delivery valve (25) and assures a sufficient strength of the valve holder.

The holder (40) constituting the delivery valve (25) comprises a holding portion (41) bent in an arc to press against the internal wall of a valve insertion space (23) over a specific range and a regulating portion (42) provided continuous to the holding portion (41) with a larger radius of curvature than the radius of curvature of the holding portion (41) to regulate the lift quantity of the roll valve (30).

## Description

The present invention relates to a structure of a delivery valve structure provided at a discharge port of a compressor or the like.

Delivery valve structures in the prior art include that disclosed in Japanese Examined Utility Model Publication No. S 62-34065. In the delivery valve structure in this example, the valve stopper is formed in a seamless cylindrical shape in order to improve the mechanical strength of the valve stopper, and the delivery valve is secured with bolts together with the valve stopper so that it is clamped between the valve stopper and the internal wall of the valve chest.

In addition, the delivery valve structure disclosed in Japanese Unexamined Patent Publication No. S 61-294185 comprises a valve plate that opens and closes the discharge port and a valve support provided on the inside of the valve plate to secure the valve plate to the valve chest by clamping the valve plate. Its special feature is that the external circumference of the valve support in the vicinity of the secured area has a radius of curvature that is approximately equal to that of the valve plate, with its external circumference in the vicinity of the discharge port having a relatively small radius of curvature.

However, a problem arises with the delivery valve structure disclosed in Japanese Examined Utility Model No. S 62-34065 in that, since the valve stopper is in contact with the valve chest only in the area where it is secured by the valve chest and the bolts, the vibration of the valve stopper caused by the pressure of the coolant and the like, which is the compressed substance, is imparted only to the junction portion of the valve stopper and the bolts, causing this portion to become exhausted, which may result in damage to the valve stopper.

An object of the present invention is to provide a delivery valve structure that facilitates the insertion of the delivery valve structure and assures sufficient strength of the valve holder.

In order to achieve the object described above, according to the present invention, in a delivery valve structure comprising a roll valve that is inserted in a cylindrical valve insertion space formed in a cylinder and opens and closes a discharge port communicating with the insertion space and a holder that regulates the lift quantity of the roll valve. The holder is constituted of a holding portion which is formed in an arc shape, to press against the internal wall of the valve insertion space over a specific range and a regulating portion that is provided continuously to the holding portion, having a larger radius of curvature than the radius of curvature of the holding portion to regulate the lift quantity of the roll valve.

Thus, according to the present invention, since the holding portion of the holder is in contact with the valve insertion space over a large area, when an abnormal pressure is applied to the holder, the pressure is dispersed.

In addition, the holder may be formed in a symmetrical form with the holding portion divided into two portions with each of the divided portions provided continuously with each side of the regulating portion.

Since the holder has a symmetrical form, when an abnormal pressure is applied, the pressure is dispersed in a consistent manner to the left and to the right, making it possible to protect the holder in a more reliable manner.

The above and other features of the invention and the concomitant advantages will be better understood and appreciated by persons skilled in the field to which the invention pertains in view of the following description given in conjunction with the accompanying drawings which illustrate preferred embodiments. In the drawings:
FIG. 1 is a cross section of a vane type compressor showing the delivery valve according to the present invention;
FIG. 2 is a lateral cross section of the cylinder block in the vane type compressor employing the delivery valve according to the present invention;
FIG. 3A illustrates the delivery valve in an inserted state and FIG. 3B is an exploded perspective illustrating the insertion; and
FIG. 4A illustrates the delivery valve in an inserted state and FIG. 4B is an exploded perspective illustrating the insertion.

The following is an explanation of the embodiments according to the present invention in reference to the drawings.

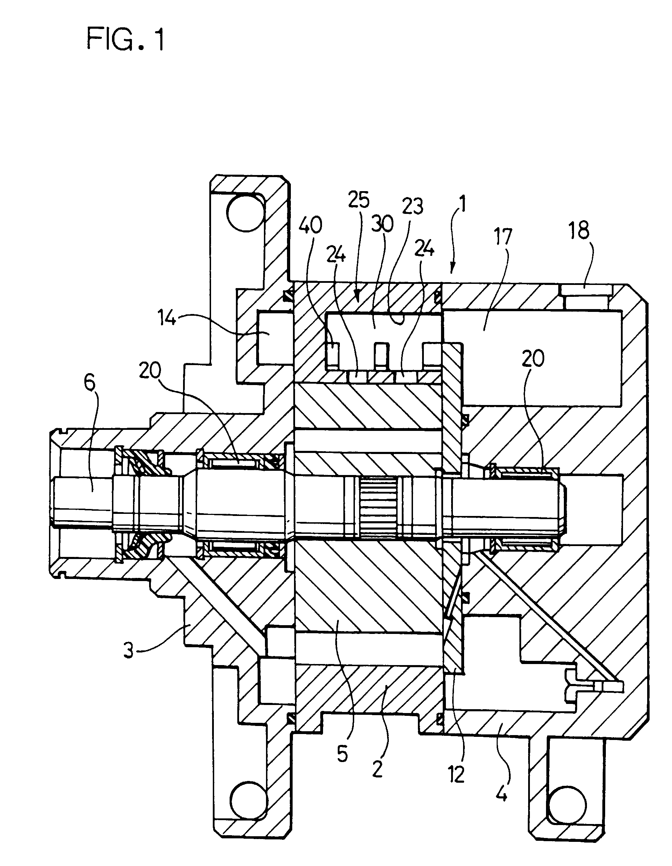

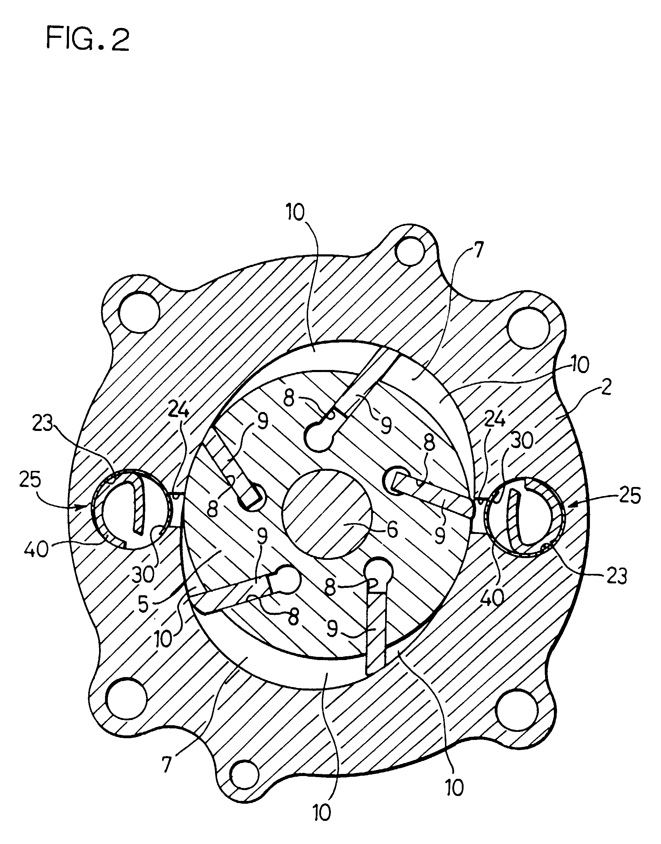

In reference to FIGS. 1 and 2, a vane type compressor 1 at which a delivery valve structure 25 is mounted is first explained. This compressor 1 is provided with a cylinder block 2 with a roughly oval shaped internal surface, and a front head 3 is securely mounted at one side of the cylinder block 2, whereas a rear side block 12 and a rear head 4 are securely mounted at the other side. In addition, a rotor 5 is provided inside the cylinder block 2. The rotor 5 is secured to a drive shaft 6 which is axially supported by the front head 3, the rear head 4 via a bearing 20, and forms two spaces at symmetrical positions within the cylinder block 2.

A plurality of vane grooves 8 (5 vane grooves in this embodiment) are provided in a roughly radial direction, with a vane 9 inserted slidably in each of the vane grooves 8. An outward force is applied to the vanes 9 by the high pressure applied to the vane grooves 8. Thus, as the rotor 5 rotates, the front ends of the vanes travel while staying in contact with the internal surface of the cylinder block 2, and compression spaces 10, which are enclosed by the cylinder block 2, the rotor 5, the front head 3, the rear side block 12 and the adjacent vanes 9, change their volumetric capacity while moving with the rotation of the rotor to perform intake and compression.

In the front head 3, a low pressure space 14 is formed between itself and the cylinder block 2, and this low pressure space 14 communicates with an intake hole (not shown) and further communicates with the space 7 via an intake port (not shown). This intake port opens in the vicinity of the longer radius of curvature at the internal surface of the cylinder block 2 where the spaces 7 gradually expand against the direction in which the rotor 5 rotates. The compressed substance (coolant, for instance) that has been induced into the low pressure space 14 flows into the compression spaces 10 via the intake port as the volumetric capacity of the compression spaces 10 increases.

In addition, a high pressure chamber 17 is formed at the rear head 4 between the rear side block 12 and the cylinder block 2. This high pressure chamber 17 communicates with a discharge hole 18 and also communicates with a valve insertion space 23, which is to be detailed below, formed in the cylinder block 2.

Moreover, in the cylinder block 2, the valve insertion space 23 formed in a cylindrical shape is aligned in the axial direction of the cylinder block 2 and discharge ports 24 that communicate between the compression spaces 10 and the valve insertion space is formed. The discharge ports 24 are formed at positions that are opposite each other in the cylinder block 2, and the discharge ports 24 open into the spaces 7 in the vicinity of the short radius of curvature portion of the internal surface of the cylinder whose space gradually becomes reduced against the direction in which the rotor 5 rotates.

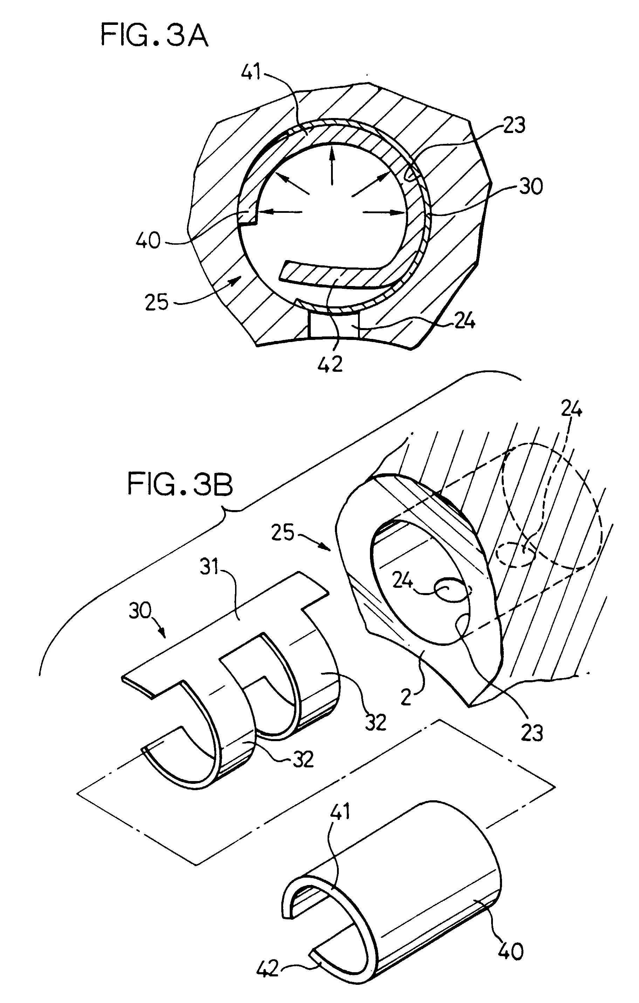

The delivery valve 25, which is inserted in this valve insertion space 23, comprises a roll valve 30 and a holder 40, as shown in FIGS. 3A and 3B. The roll valve 30, which is constituted of an elastic member such as spring steel, steel, synthetic resin or the like, comprises a holding portion 31 formed approximately equal to or slightly shorter than the length of the valve insertion space 23 in the axial direction and a pair of lift portions 32 and 32 that extend in a direction perpendicular to the lengthwise direction of the holding portion 31. The lift portions 32 extend out from specific positions on the holding portion 31 over a specific width, and the distance between the two lift portions 32 is approximately equal to the width of the pair of discharge ports 24. Thus, when the roll valve 30 is loaded, the lift portions 32 block off the discharge ports 24.

In addition, the holder 40 is formed from a single plate constituted of synthetic resin, metal or the like, and comprises a holding portion that bends in an arc with a radius slightly larger than the radius of the cylindrically shaped valve insertion space 23 and when the holder 40 is inserted in the valve insertion space 23, it applies pressure against the internal wall of the valve insertion space 23 over a range of 180° or more, and a regulating portion 42 that bends in an arc whose radius is larger than the radius of the holding portion 41 and regulates the lift quantity of the roll valve.

FIG. 3A shows the delivery valve structure 25 comprising the roll valve 30 that opens and closes the discharge ports 24 communicating with the valve insertion space 23 and the holder 40 that regulates the lift quantity of the roll valve 30, inserted in the valve insertion space 23. The delivery valve structure 25 is mounted by first inserting the roll valve 30 into the valve insertion space 23 and then inserting the holder 40 under compression stress. When the holder 40 is thus mounted, the recovery force of the holder 40 against the compression stress acts in the directions indicated by the arrows in FIG. 3A so that the holder 40 is secured within the valve insertion space 23 by this recovery force and the roll valve 30 is secured by being clamped between the holder 40 and the internal wall of the valve insertion space 23. It is to be noted that while, in this embodiment, the roll valve 30 is secured by a clamping pressure between the holder 40 and the internal wall of the valve insertion space 23 by utilizing the recovery force of the holder, the roll valve 30 may, instead, be spot-welded to the holder 40 in advance.

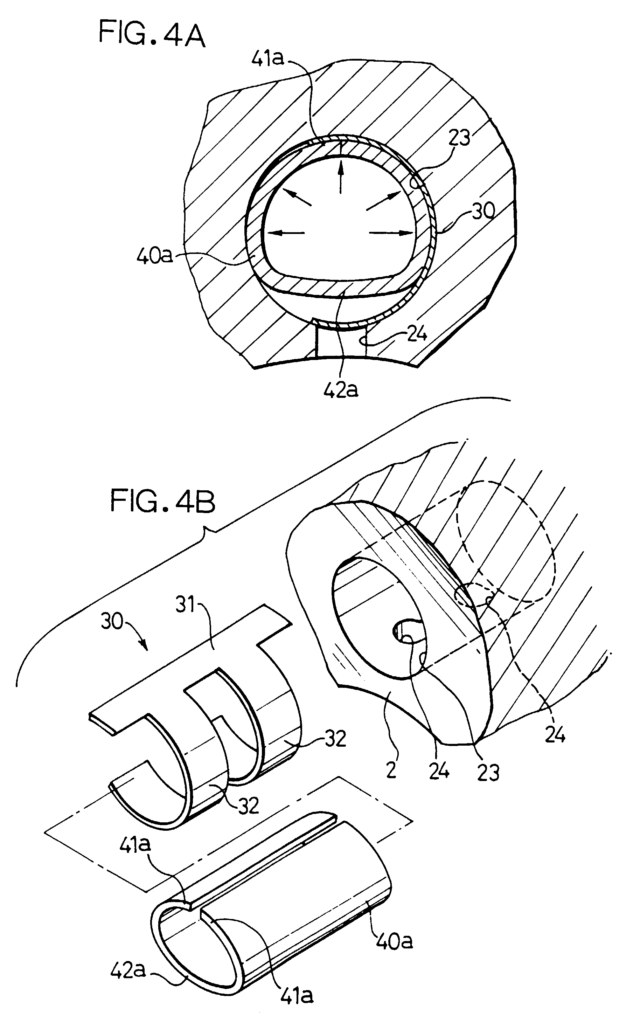

FIGS. 4A and 4B show the second embodiment of the holder. While the holder 40a in the second embodiment is formed from a single plate constituted of synthetic resin, metal or the like, as in the case of the holder 40 in the first embodiment, it has two separate holding portions 41a with each of them provided continuously at either side of the regulating portion 42a to press against the internal wall of the valve insertion space 23 over a range of 180° or more. In addition, the regulating portion 42a, which is bent in an arc with a larger radius than the radius of the holding portions, regulates the lift quantity of the roll valve. In other words, the two separate holding portions 41a are formed so that they lie symmetrical to each other and are continuous with the two sides of the regulating portion 42a, and the second embodiment differs from the previous embodiment in that it has separate holding portions 41a and in that when the holder 40a is inserted in the valve insertion space 23, the shape of the holder 40a achieves a left / right symmetry toward the direction in which it is inserted in the valve insertion space 23.

FIG. 4A shows the delivery valve structure 25 comprising the roll valve 30 that opens and closes the discharge ports 24 communicating with the valve insertion space 23 and the holder 40a that regulates the lift quantity of the roll valve 30, inserted in the cylindrical valve insertion space 23. The delivery valve structure 25 is mounted by first inserting the roll valve 30 into the valve insertion space 23 and then inserting the holder 40a under compression stress. When the holder 40a is thus mounted, the recovery force of the holder 40a against the compression stress acts in the directions indicated by the arrows in FIG. 4A so that the holder 40a is secured within the valve insertion space 23 by this recovery force and the roll valve 30 is secured by being clamped between the holder 40a and the internal wall of the valve insertion space 23. It is to be noted that while, in this embodiment, the roll valve 30 is secured by a clamping pressure between the holder 40a and the internal wall of the valve insertion space 23 by utilizing the recovery force of the holder, the roll valve 30 may, instead, be spot-welded to the holder 40a in advance. Now, as explained above, since, in this embodiment, the holder 40a constituting the delivery valve structure 25 is mounted to achieve left / right symmetry, with the axis of symmetry matching the direction in which the coolant is discharged at the discharge ports 24, toward the direction of the axis of the valve insertion space, the discharge pressure applied to the holder 40a is dispersed evenly to the left and right over the internal wall of the valve insertion space, thereby achieving an improvement in the strength of the holder 40a.

As has been explained, according to the present invention, since the holder is in contact with the valve insertion space over a large area, even when an abnormal pressure is applied to the holder by the compressed substance such as coolant or the like, the pressure can be dispersed over a large area, thus preventing the holder from becoming damaged through vibration, and also achieving a reduction in the wear through friction in the local area where the holder and the valve insertion space make contact.

Furthermore, by forming the holder with a left / right symmetrical shape, when an abnormal pressure is applied to the holder by the compressed substance such as coolant or the like, the pressure is dispersed evenly to the left and right, thereby improving the strength of the holder and protecting the holder from the pressure.

Moreover, with the holder in contact with the valve insertion space over a large area, sufficient strength of the holder is easily assured, thereby allowing a greater degree of freedom in the selection of the plate thickness, material and the like of the holder to achieve a reduction in cost.

## Claims

1. A delivery valve structure comprising:
a cylindrical valve insertion space formed in a cylinder block (2) enclosing a compression space (10) of a compressor (1), that communicates with a high pressure chamber (17) of said compressor (1) in the axial direction;
a plurality of discharge ports (24), with one end of each of said discharge ports (24) opening at a internal wall of said valve insertion space (23) to communicate between said compression space (10) and said valve insertion space (23); and
a delivery valve structure (25) comprising a roll valve (30) that opens and closes said discharge ports (24) and a holder (40) that regulates a lift quantity of said roll valve (30), characterized in that:
said roll valve (30) is constituted of an elastic material, and comprises a holding portion (31) having a length approximately equal to or slightly smaller than a length of said valve insertion space (23) in said axial direction and lift portions (32) that extend out to positions at which said discharge ports (24) can be opened or closed from said holding portion (31) along said internal wall of said valve insertion space (23); and
said holder (40) comprises a holding portion (41) bent in an arc to hold said holding portion (31) of said roll valve (30) by pressing against said holding portion (31) of said roll valve (30) against said intemal wall of said valve insertion space (23) over a specific range and a regulating portion (42) provided continuous to said holding portion (41) with a larger radius of curvature than the radius of curvature of said holding portion (41) to regulate said lift quantity of said roll valve (30).

2. A delivery valve structure according to claim 1, characterized in that:
in said holder (40a), said holding portion (41a) is divided into two portions, each provided continuously at either side of said regulating portion (42a) to achieve symmetry.

3. A delivery valve structure according to claim 1 or 2, characterized in that:
said holding portion (41, 41a) presses against said internal wall of said valve insertion space (23) over a range of 180° or more via said holding portion (31) of said roll valve (30).

4. A delivery valve structure according to any of preceding claims, employed in a vane type compressor and provided at two sides facing opposite each other in a cylinder block (2).

5. A delivery valve structure according to any of preceding claims, wherein:
said vane type compressor comprises a front head (3) secured at one side of said cylinder block (2), a rear side block (12) secured at another side of said cylinder block (2) and a rear head (4) that holds said rear side block (12) and is provided with said high pressure chamber (17), with said valve insertion space (23) opening into said high pressure chamber (17) and said delivery valve structure (25) held by said rear side block (12) in said axial direction of said valve insertion space (23).

6. A delivery valve structure according to any of preceding claims, wherein:
said elastic material constituting said roll valve (30) is spring steel.

7. A delivery valve structure according to any of preceding claims, wherein:
said holder (40) is constituted of a synthetic resin.
